Europäisches Patentamt

European Patent Office

Office européen des brevets

(19)

(11) Veröffentlichungsnummer: **0 309 910 B1**

(12) **EUROPÄISCHE PATENTSCHRIFT**

(45) Veröffentlichungstag der Patentschrift: **11.03.92**

(51) Int. Cl.⁵: **B01J 20/06**, B01D 53/34

(21) Anmeldenummer: **88115565.9**

(22) Anmeldetag: **22.09.88**

(54) **Zinkoxid enthaltende Entschwefelungsmassen.**

(30) Priorität: **30.09.87 DE 3732932**

(43) Veröffentlichungstag der Anmeldung:
**05.04.89 Patentblatt 89/14**

(45) Bekanntmachung des Hinweises auf die
Patenterteilung:
**11.03.92 Patentblatt 92/11**

(84) Benannte Vertragsstaaten:
**BE DE ES FR GB NL**

(56) Entgegenhaltungen:
**DE-B- 1 226 549**
**US-A- 3 441 370**
**US-A- 4 071 609**
**US-A- 4 533 529**

(73) Patentinhaber: **BASF Aktiengesellschaft**
**Carl-Bosch-Strasse 38**
**W-6700 Ludwigshafen(DE)**

(72) Erfinder: **Becker, Hans-Juergen, Dr.**
**Beutenfeldstrasse 19**
**W-7257 Ditzingen(DE)**
Erfinder: **Geierhaas, Herbert, Dr.**
**In den Weingaerten 24**
**W-6706 Wachenheim(DE)**
Erfinder: **Irgang, Matthias, Dr.**
**Andreas-Hofer-Weg 41**
**W-6900 Heidelberg(DE)**
Erfinder: **Sprague, Michael Jolyon, Dr.**
**Lachner Strasse 3**
**W-6800 Mannheim 1(DE)**

EP 0 309 910 B1

**Beschreibung**

Die vorliegende Erfindung betrifft eine verbesserte Zinkoxid enthaltende Entschwefelungsmasse sowie ein Verfahren zur Herstellung dieser Masse. Die Erfindung betrifft weiterhin die Verwendung dieser Zinkoxid enthaltenden Masse zur Entschwefelung von Gasen und Dämpfen.

In vielen chemischen und petrochemischen Verfahren werden Katalysatoren auf der Grundlage von Übergangsmetallen, z.B. Nickel, Eisen, Kupfer, Chrom, verwendet. Solche Katalysatoren sind besonders empfindlich gegenüber Verunreinigungen und können dadurch sehr leicht vorübergehend oder permanent vergiftet werden. Hierbei sind $H_2S$, COS und verschiedene organische Schwefelverbindungen besonders schädlich. Es ist daher unbedingt erforderlich, daß bei Verwendung solcher Übergangsmetalle enthaltender Katalysatoren der Prozeßgasstrom von $H_2S$ und anderen Schwefelverbindungen befreit wird.

Es ist bereits bekannt, z.B. aus der US-Patentschrift 4 128 619, daß oberflächenreiches Zinkoxid für die Entfernung von $H_2S$, COS und Mercaptanen aus schwefelhaltigen Prozeßgasströmen besonders wirksam ist. Bei der Verwendung von Zinkoxid enthaltenden Entschwefelungsmassen wird das Zinkoxid in Zinksulfid umgewandelt. Somit hängt die Lebensdauer der Entschwefelungsmasse von dem Schwefelgehalt des Prozeßgasstroms und von der optimalen Ausnutzung des Zinkoxids ab. Die Zugänglichkeit der Zinkoxidoberfläche für die Entschwefelungsreaktionen und auch die Menge an Zinkoxid, die in den vorhandenen Reaktor eingebaut werden kann, sind für die effektive Lebensdauer der Entschwefelungsmasse entscheidend. Die erreichbare Menge an Zinkoxid pro Volumeneinheit hängt von der Dichte und der Reinheit der Masse ab. Ist die Reinheit niedrig, dann ist ein Teil des Reaktors mit inaktivem Material gefüllt, woraus sich ergibt, daß sowohl hohe Dichte als auch hohe Reinheit von Vorteil sind. Die Zugänglichkeit des Zinkoxids für die Entschwefelungsreaktionen hängt von der Porosität und von der Oberfläche ab. Ein weiterer wesentlicher Faktor, der berücksichtigt werden muß, ist die Härte der Masse. Die Entschwefelungsmasse sollte eine solche Härte aufweisen, daß sie während des Transports oder beim Befüllen des Reaktors oder während der Laufzeit der Absorptionsmasse nicht zerfällt.

Die obengenannten Bedingungen sind aber nicht voneinander unabhängig und schließen sich zum Teil gegenseitig aus. Bei der Formulierung einer wirksamen Entschwefelungsmasse müssen somit eine ganze Reihe von Parametern sorgfältig abgestimmt werden. Durch Erhöhung der Oberfläche und der Porosität wird die Verfügbarkeit des Zinkoxids erhöht, aber gleichzeitig verringert sich die Dichte und damit die Menge an Zinkoxid pro Volumeneinheit des Reaktors. Darüber hinaus führt im allgemeinen eine Erhöhung der Porosität zu einem unerwünschten Rückgang der Härte.

In der deutschen Auslegeschrift 1 226 549 wird ein Verfahren beschrieben, bei dem inaktives Zinkoxid in aktives Zinkoxid übergeführt wird, indem das inaktive Zinkoxid in Gegenwart von Ammoniumbicarbonat und geringen Mengen Wasser und eventuell in Gegenwart von Kohlendioxidgas in einem Kneter plastifiziert und anschließend geformt und getrocknet wird. Die so erhaltenen Entschwefelungsmassen zeigen jedoch nur eine relativ geringe Schwefelaufnahmekapazität, nämlich 90 bis 150 g Schwefel pro kg ZnO bei Temperaturen zwischen 300 und 400°C.

Nach den in den US-Patentschriften 4 071 609 und 4 128 619 beschriebenen Verfahren werden Zinkoxidformlinge mit Kohlendioxid und Wasserdampf behandelt. Hierbei werden zwar Entschwefelungsmassen von befriedigender Härte und mit einer Schwefelaufnahmekapazität bei 340°C von ca. 100 g Schwefel pro kg ZnO erhalten, aber das Herstellverfahren ist kompliziert. Darüber hinaus müssen die Behandlungsbedingungen sorgfältig gewählt werden, damit bei der Behandlung mit Kohlendioxid und Wasserdampf basisches Zinkcarbonat ($5ZnO \times 2\ CO_2 \times 3\ H_2O$) und nicht das unerwünschte normale Zinkcarbonat ($ZnCO_3$) gebildet wird.

Es bestand daher die Aufgabe, eine Zinkoxid enthaltende Entschwefelungsmasse herzustellen, die in einem breiten Temperaturbereich eine hohe Schwefelaufnahmekapazität bei einer ausreichenden mechanischen Härte aufweist. Als ausreichende Härte wird eine Schneidhärte von mindestens etwa 1,5 kg angesehen. Diese Schneidhärte wird an den Formkörpern mit einer Schneide von 0,3 mm Stärke bestimmt. Die Schneidhärte ist dabei das Gewicht in Kilogramm, bei dem 50 % der Formlinge mit der Schneide durchgetrennt werden.Eine Schneidhärte von 1,5 kg ist ausreichend, um den Transport und das Einfüllen der Entschwefelungsmasse in einen Reaktor ohne Bruch zu überstehen sowie ein Eigengewicht bei Schütthöhen von bis zu 8 m zu tragen.

Diese Aufgabe wird erfindungsgemäß dadurch gelöst, daß man eine 20 bis 80 Gew.-% oberflächenreiches Zinkoxid und 20 bis 80 Gew.-% basisches Zinkcarbonat enthaltende Mischung in Gegenwart von Wasser knetet, anschließend verformt und die erhaltenen Formkörper, gegebenenfalls nach dem Trocknen, calciniert.

Bei der Herstellung der erfindungsgemäßen Entschwefelungsmassen kann es vorteilhaft sein, der Rohmasse Bindemittel wie $Al_2O_3.H_2O$ (Pural), Calciumaluminat (Sekarzement) in Mengen von zweckmäßig 0 bis 20 Gew.-%, vorzugsweise 0,5 bis 15 Gew.-%, bezogen auf die Gesamttrockenmasse, zuzugeben. Die Entschwefelungsmasse wird zweckmäßig in Form von Formkörpern wie Tabletten, Pellets, Extrudaten, z.B. mit rundem Querschnitt, ringförmigem Querschnitt oder mit eingekerbtem Querschnitt (z.B. kleeblattförmiger oder sternförmiger Querschnitt) verwendet.

Unter oberflächenreichem Zinkoxid sind Zinkoxide zu verstehen, die eine BET-Oberfläche von mindestens 10 m$^2$ x g$^{-1}$, zweckmäßig mindestens 15 m$^2$ x g$^{-1}$, vorzugsweise mindestens 20 m$^2$ x g$^{-1}$, insbesondere mindestens 30 m$^2$ x g$^{-1}$ aufweisen. Solche oberflächenreichen Zinkoxide werden in an sich bekannter Weise erhalten, beispielsweise durch Ausfällen von Zinkhydroxid aus wäßrigen Lösungen von Zinksalzen durch Zugabe von Alkali wie Soda oder Natronlauge und vorsichtiges Sintern des erhaltenen abgetrennten Zinkhydroxids bei erhöhten Temperaturen, im allgemeinen bei Temperaturen von 200 bis 500°C, vorzugsweise 250 bis 350°C.

Als basisches Zinkcarbonat der Formel $5ZnO.2CO_2.3H_2O$ wird im allgemeinen ein Produkt in technischer Qualität eingesetzt.

Erfindungsgemäß wird eine 20 bis 80 Gew.-%, vorzugsweise 25 bis 75 Gew.-% oberflächenreiches Zinkoxid und 20 bis 80 Gew.-%, vorzugsweise 25 bis 75 Gew.-% basisches Zinkcarbonat enthaltende Mischung in Gegenwart von Wasser geknetet. Im allgemeinen wird Wasser in einer Menge von 10 bis 60 Gew.-%, vorzugsweise 15 bis 55 Gew.-%, insbesondere 20 bis 50 Gew.-%, bezogen auf die Gesamtmenge von oberflächenreichem Zinkoxid und basischem Zinkcarbonat verwendet. Im allgemeinen erfolgt das Verkneten 1 bis 10 Stunden, vorzugsweise 1 bis 5 Stunden.

Anschließend erfolgt die Verformung zu Formkörpern wie Tabletten, Pellets, Strangpreßlingen. Zweckmäßig werden die erhaltenen Formkörper vor dem Calcinieren getrocknet. Im allgemeinen werden Temperaturen von 50 bis 220°C, insbesondere 90 bis 180°C angewendet. Es ist jedoch auch möglich, die erhaltenen Formkörper ohne Trocknung unmittelbar zu calcinieren.

Die Calcinierung wird im allgemeinen bei Temperaturen von 250 bis 650°C, vorzugsweise 300°C bis 550°C, insbesondere 300 bis 500°C durchgeführt. Im allgemeinen wird die Calcinierung 1 bis 10 Stunden, vorzugsweise 1 bis 8 Stunden, insbesondere 1 bis 5 Stunden durchgeführt.

Zur Entfernung von Schwefelverbindungen wie $H_2S$, COS, Merkaptane aus diese enthaltenden Gasen und Dämpfen werden die Schwefelverbindungen enthaltenden Gase oder Dämpfe zweckmäßig über ein die erfindungsgemäßen Entschwefelungsmassen enthaltendes Bett geleitet. Dabei werden im allgemeinen Temperaturen von 50 bis 500°C, vorzugsweise 50 bis 450°C, insbesondere 100 bis 400°C angewendet.

Das erfindungsgemäße Verfahren wird anhand des nachstehenden Beispiels näher erläutert.

Beispiel

250 kg aktives Zinkoxid mit einer BET-Oberfläche von 35 m$^2$ x g$^{-1}$ wurden mit 150 kg basischem Zinkcarbonat und 130 kg Wasser zwei Stunden lang verknetet und dann durch Zusatz von 8 kg Wasser formfähig gemacht. Die Masse wurde zu Strangpreßlingen verformt, eine Stunde lang bei 150°C mit heißer Luft getrocknet und schließlich 1 Stunde lang bei einer Temperatur von 450°C calciniert. Die so erhaltene Entschwefelungsmasse hatte ein Litergewicht von 1265 g, eine Schneidhärte von 1,8 kg und eine BET-Oberfläche von 44,4 m$^2$ x g$^{-1}$.

Zur Bestimmung des Schwefelaufnahmevermögens wurde eine zerkleinerte Probe (Korngröße 0,5 bis 1,6 mm) der Entschwefelungsmasse auf die entsprechende Temperatur gebracht und mit einem Gasstrom, der aus 1 Vol.-Teil Schwefelwasserstoff und 99 Vol.-Teilen Stickstoff bestand, so lange beaufschlagt, bis die Schwefelwasserstoffkonzentration im Ausgangsgasstrom auf 7 Vol.-ppm angestiegen war.

In der Tabelle sind die aufgenommenen Mengen Schwefel in Gramm pro Kilogramm Entschwefelungsmasse bei verschiedenen Temperaturen angegeben.

Tabelle

| Temperatur [°C] | Aufgenommene Menge Schwefel (Gramm Schwefel pro Kilogramm Entschwefelungsmasse) |
|---|---|
| 50 | 33 |
| 100 | 54 |
| 150 | 80 |
| 200 | 131 |
| 250 | 173 |
| 300 | 211 |
| 350 | 250 |

Wie der Tabelle zu entnehmen ist, weist die erfindungsgemäße Entschwefelungsmasse eine hohe Schwefelaufnahmekapazität von bis zu 250 g Schwefel pro kg Entschwefelungsmasse auf.

**Patentansprüche**

1. Verfahren zur Herstellung von Zinkoxid enthaltenden Entschwefelungsmassen, dadurch gekennzeichnet, daß man eine 20 bis 80 Gew.-% oberflächenreiches Zinkoxid mit einer BET-Oberfläche von mindestens 10 m$^2$ x g$^{-1}$ und 20 bis 80 Gew.-% basisches Zinkcarbonat enthaltende Mischung in Gegenwart von Wasser knetet, anschließend verformt und die erhaltenen Formkörper, gegebenenfalls nach dem Trocknen, calciniert.

2. Eine Entschwefelungsmasse, dadurch gekennzeichnet, daß sie nach dem Verfahren des Anspruchs 1 erhältlich ist.

3. Verwendung der Entschwefelungsmasse gemäß Anspruch 1 zur Entfernung von Schwefelverbindungen aus Gasen und Dämpfen.

**Claims**

1. A process for preparing a desulfurization composition which contains zinc oxide, which comprises kneading a mixture which contains from 20 to 80% by weight of surface-rich zinc oxide having a BET surface area of at least 10 m$^2$ x g$^{-1}$ and from 20 to 80% by weight of basic zinc carbonate in the presence of water, then molding, and calcining the molded article obtained, with or without prior drying.

2. A desulfurization composition, obtainable by the process of claim 1.

3. Use of a sulfurization composition as set forth in claim 1 for removing sulfur compounds from gases and vapors.

**Revendications**

1. Procédé de préparation de masses de désulfuration contenant de l'oxyde de zinc, caractérisé en ce qu'on pétrit en présence d'eau un mélange contenant de 20 à 80% en poids d'oxyde de zinc de surface spécifique élevée ayant une surface spécifique BET d'au moins 10 m$^2$ x g$^{-1}$ et de 20 à 80% en poids de carbonate de zinc basique, on le façonne ensuite et on calcine les formes façonnées obtenues, éventuellement après leur séchage.

2. Masse de désulfuration, caractérisée en ce qu'elle est obtenue selon le procédé de la revendication 1.

3. Utilisation de la masse de désulfuration selon la revendication 1 pour enlever les composés soufrés de gaz et de vapeurs.